# EUROPEAN PATENT APPLICATION

(11) **EP 4 350 623 A1**
(43) Date of publication of application: **10.04.2024**
(21) Application number: 22810277.8
(22) Date of filing: 22.04.2022
(51) Int. Cl.: G06T 7/11

(54) **MAP PARTITIONING METHOD AND APPARATUS, AND AUTONOMOUS MOBILE DEVICE AND STORAGE MEDIUM**

(30) Priority: 25.05.2021 CN 202110572880
(71) Applicant: Qfeeltech (Beijing) Co., Ltd., Beijing 100191 (CN)
(72) Inventor: WU, Chenhao, Beijing 100191 (CN)
(74) Representative: Novagraaf International SA
(86) International application number: PCT/CN2022/088608
(87) International publication number: WO 2022/247544

(57) **Abstract**

The present disclosure provides a map zone dividing method, an apparatus, an autonomous mobile device and a storage medium. The method includes: obtaining a map of a target zone; the map includes reachable boundaries in the target zone for the autonomous mobile device; for a plurality of internal points within the reachable boundaries in the map, determining a representative distance value of an internal point based on distances from the internal point to each of the reachable boundaries; determining a main structure of each map candidate room based on representative distance values of internal points within the reachable boundaries in the map; expanding a main structure of each map candidate room, to obtain each map room. A distance value of each point is determined according to the principle of distance becoming larger and larger from a boundary to a center. A main structure of each map candidate room is determined based on characteristics of distribution of the distance value of each point. A boundary of each map room is determined through expanding the main structure of each map candidate room, thereby completing zone division of the map, increasing zone dividing efficiency.

## Description

This application claims priority to Chinese Patent Application No. 202110572880.X, filed in Chinese Patent Office on May 25, 2021, and titled "Map Zone Dividing Method, Apparatus, Autonomous Mobile Device and Storage Medium," the entire content of which is incorporated herein by reference.

### TECHNICAL FIELD

The present disclosure relates to the technology of data processing, and in particular, to a map zone dividing method, an apparatus, an autonomous mobile device and a storage medium.

### BACKGROUND TECHNOLOGY

As the advance of technology and improvement of living standards, more and more autonomous mobile devices equipped with different functions have entered people's homes, such as cleaning robots, companion type mobile robots, etc., which have made people's life more comfortable and convenient.

An autonomous mobile device is a smart device that autonomously executes predetermined tasks in a predetermined work zone. Currently available autonomous mobile devices typically include, but are not limited to, cleaning robots (e.g., smart floor sweeping robots, smart floor mopping robots, window cleaning robots), companion type mobile robots (e.g., smart electronic pets, nanny robots), service type mobile robots (e.g., receptionist robots in restaurants, hotels, meeting places), industrial inspection smart devices (e.g., electric power line inspection robots, smart forklift, etc.), security robots (e.g., home or commercial use smart bodyguard robots), etc.

An autonomous mobile device typically can autonomously move in a limited space. For example, cleaning robots, companion type mobile robots typically move indoor, service type mobile robots typically move in a specific limited space in a hotel, a meeting place, etc. The limited space may be referred to as a work zone of the autonomous mobile device.

Oftentimes, the work zone of the autonomous mobile device may not be an open space, but rather, may be multiple indoor zones divided by walls, doors, or other separating objects, such as multiple rooms. In certain scene, a user may wish that the autonomous mobile device is able to accurately recognize functional zones in a map of the work zone, such as a living room, a bedroom, a kitchen, a hallway, etc., and display the functional zones to the user on a human-machine user interface (UI), such that the user may select from the displayed functional zones a specific or multiple rooms to instruct the autonomous mobile device to execute specific tasks. This may require the autonomous mobile device to be able to smartly, accurately identify various functional zones in the map of the work zone.

In existing technology, the map of the work zone is typically automatically divided into zones through recognizing locations of "doors." However, due to the differences in the design fashions of the rooms in the work zone, there may not be a particularly definite "door" between certain rooms to function as the division mark, which may cause the autonomous mobile device to be unable to accurately recognize doors. Therefore, the adaptability of such a zone division method is poor, and false determination rate is relatively high.

### CONTENT OF INVENTION

The present disclosure provides a map zone dividing method, an apparatus, an autonomous mobile device and a storage medium. The division is based on zone features, which increases the efficiency of map zone division.

According to a first aspect, the present disclosure provides a map zone dividing method, including:
obtaining a map of a target zone; the map including reachable boundaries in the target zone for an autonomous mobile device;
for a plurality of internal points within the reachable boundaries in the map, determining a representative distance value of an internal point based on distances from the internal point to each of the reachable boundaries;
determining a main structure of each map candidate room based on representative distance values of the plurality of internal points within the reachable boundaries in the map;
expanding the main structure of each map candidate room, to obtain each map room.

Optionally, determining a main structure of each map candidate room based on the representative distance values of the plurality of internal points within the reachable boundaries in the map, includes:
setting a shortest distance of distances from an internal point to each of the reachable boundaries as a representative distance value;
repeatedly executing the following steps, until no more seed exists in the updated map:
determining, in the map, an internal point having a maximum representative distance value;
determining a first threshold value based on the maximum representative distance value in the map; the first threshold value being smaller than the maximum representative distance value;
determining at least one seed zone in the map in which internal points having representative distance values greater than the first threshold value and smaller than the maximum representative distance value are located;
for each seed zone, when an internal point having the maximum representative distance value is located within the seed zone, setting the seed zone as a seed of the map candidate room.
dilating the seed of the map candidate room to obtain the main structure of the map candidate room;
deleting from the map the main structure of the map candidate room to obtain an updated map.

Optionally, determining a main structure of each map candidate room based on the representative distance values of the plurality of internal points within the reachable boundaries in the map, includes:
setting a longest distance of distances from an internal point to each of the reachable boundaries as a representative distance value;
repeatedly executing the following steps, until no more seed exists in the updated map:
determining in the map an internal point having the minimum representative distance value;
determining a second threshold value based on the minimum representative distance value in the map, the second threshold value being greater than the minimum representative distance value;
determining at least one seed zone in the map in which internal points having representative distance values smaller than the second threshold value and greater than the minimum representative distance value are located;
for each seed zone, when an internal point having the minimum representative distance value is located within the seed zone, setting the seed zone as a seed of the map candidate room;
dilating the seed of the map candidate room, to obtain the main structure of the map candidate room;
deleting from the map the main structure of the map candidate room, to obtain an updated map.

Optionally, expanding the main structure of each map candidate room, to obtain each map room, includes:
expanding the main structure of each map candidate room at the same time and at the same predetermined speed, to form an expanded main structure;
when an expanded main structure of a map candidate room encounters an expanded main structure of another map candidate room to form a main structure crossing boundary, or when the expanded main structure of the map candidate room encounters a reachable boundary of the map, then stopping expansion, to obtain each map room.

Optionally, after expanding the main structure of each map candidate room, to obtain each map room, the method also includes:
fusing each map room, to obtain a post-fusion map room.

Optionally, fusing each map candidate room, to obtain a post-fusion map room, includes:
obtaining an area of each map room and a main structure crossing border between the map rooms;
determining an adjacency relationship between map rooms based on the main structure crossing border between the map rooms, to determine adjacent rooms;
comparing an area of a map room with an area threshold value, when the area of the map room is smaller than the area threshold value, determining the map room as a target room;
fusing the target room with an adjacent room of the target room to obtain a post-fusion map room.

Optionally, obtaining the map of the target zone, includes:
obtaining an original map of the target zone;
pre-processing the original map, to obtain the map of the target zone.

According to a second aspect, the present disclosure provides a map zone dividing apparatus, including:
an obtaining module, configured to obtain a map of a target zone; the map including reachable boundaries in the target zone for an autonomous mobile device;
a representative distance value determining module, configured to determine, for a plurality of internal points within the reachable boundaries in the map, a representative distance value of an internal point based on distances from the internal point to each of the reachable boundaries;
a main structure determining module, configured to determine a main structure of each map candidate room based on representative distance values of the plurality of internal points within the reachable boundaries in the map;
a main structure expanding module, configured to expand the main structure of each map candidate room, to obtain each map room.

Optionally, the main structure determining module is specifically configured to:
set a representative distance value as a shortest distance of distances from an internal point to each of the reachable boundaries;
repeatedly execute the following steps, until no more seed exists in the updated map:
determine, in the map, an internal point having a maximum representative distance value;
determine a first threshold value based on the maximum representative distance value in the map; the first threshold value being smaller than the maximum representative distance value;
determine at least one seed zone in the map in which internal points having representative distance values greater than the first threshold value and smaller than the maximum representative distance value are located;
for each seed zone, when an internal point having the maximum representative distance value is located within the seed zone, set the seed zone as a seed of the map candidate room;
dilate the seed of the map candidate room, to obtain the main structure of the map candidate room;
delete from the map the main structure of the map candidate room, to obtain an updated map.

Optionally, the main structure determining module is specifically configured to:
set a longest distance of distances from an internal point to each of the reachable boundaries as a representative distance value;
repeatedly execute the following steps, until no more seed exists in the updated map:
determine, in the map, an internal point having a minimum representative distance value;
determine a second threshold value based on the minimum representative distance value in the map, the second threshold value being greater than the minimum representative distance value;
determine at least one seed zone in the map in which internal points having representative distance values smaller than the second threshold value and greater than the minimum representative distance value are located;
for each seed zone, when an internal point having the minimum representative distance value is located within the seed zone, set the seed zone as a seed of the map candidate room;
dilate the seed of the map candidate room, to obtain the main structure of the map candidate room;
delete from the map the main structure of the map candidate room, to obtain the updated map.

Optionally, the main structure expanding module is specifically configured to:
expand the main structure of each map candidate room at the same time and at the same predetermined speed, to form an expanded main structure;
when an expanded main structure of a map candidate room encounters an expanded main structure of another map candidate room to form a main structure crossing border, or when the expanded main structure of the map candidate room encounters a reachable boundary of the map to form a main structure boundary, then stop expansion, to obtain each map room.

Optionally, the apparatus also includes: a fusing module, configured to, after the main structure expanding module expands the main structure of each map candidate room to obtain each map room, fuse each map room, to obtain a post-fusion map room.

Optionally, when the fusing module fuses each map candidate room, to obtain the post-fusion map room, the fusing module is specifically configured to:
obtain an area of each map room and a main structure crossing border between the map rooms;
determine an adjacency relationship between map rooms based on the main structure crossing border between the map rooms, to determine adjacent rooms;
compare an area of a map room with an area threshold value, when the area of the map room is smaller than the area threshold value, determine the map room as a target room;
fuse the target room and an adjacent room of the target room.

Optionally, the obtaining module is specifically configured to:
obtain an original map of the target room;
pre-process the original map, to obtain a map of the target zone.

According to a third aspect, the present disclosure provides an autonomous mobile device, including a storage device, configured to store program instructions; a processor, configured to retrieve the program instructions from the storage device and execute them, to execute the method according to the first aspect.

According to a fourth aspect, the present disclosure provides a computer-readable storage medium. The storage medium stores a computer program. When the computer program is executed by a processor, the method of the first aspect is performed.

According to a fifth aspect, the present disclosure provides a computer program product, including a computer program. When the computer program is executed by a processor, the method of the first aspect is performed.

The present disclosure provides a map zone dividing method, an apparatus, an autonomous mobile device and a storage medium. The method includes: obtaining a map of a target zone; the map includes reachable boundaries in the target zone for the autonomous mobile device; for a plurality of internal pints within the reachable boundaries in the map, determining a representative distance value of an internal point based on distances from the internal point to each of the reachable boundaries; determining a main structure of each map candidate room based on representative distance values of the plurality of internal points within the reachable boundaries in the map; expanding the main structure of each map candidate room, to obtain a map room. In the technical solution of the present disclosure, through determining a representative distance value of each point in the map, and based on characteristics of a distribution of the representative distance value of each point, a main structure of each map candidate room is determined, and through expanding the main structure of each map candidate room, a reachable boundary of each map room is determined, thereby completing the automatic zone division of the map. The technical solution of the present disclosure does not rely on zone dividing marks such as walls, doors, etc., in the actual space. The technical solution is suitable for zone division in more scenes, and the zone division accuracy is higher.

### BRIEF DESCRIPTIONS OF THE ACCOMPANYING DRAWINGS

To explain more clearly the technical solutions of the present disclosure or of the existing technologies, the accompanying drawings that are used in the description of the embodiments or the existing technologies are briefly introduced. Obviously, the accompanying drawings described below show some embodiments of the present disclosure. For a person having ordinary skills in the art, other accompanying drawings may be obtained based on these accompanying drawings without expending creative effort.
FIG. 1 is a schematic illustration of an application scene according to the present disclosure;
FIG. 2 is a flowchart showing a map zone dividing method according to an embodiment of the present disclosure;
FIG. 3 is a schematic illustration of distance values of internal points in a space according to an embodiment of the present disclosure;
FIG. 4 is a flowchart illustrating determination of a main structure of a map candidate room according to an embodiment of the present disclosure;
FIG. 5 is a schematic illustration of expanding a main structure of a map candidate room according to an embodiment of the present disclosure;
FIG. 6 is a flowchart showing fusion of each map candidate room according to an embodiment of the present disclosure;
FIGs. 7a to 7n are schematic illustrations of the map generated in the map zone dividing process according to an embodiment of the present disclosure;
FIG. 8 is a schematic illustration of a structure of a map zone dividing apparatus according to an embodiment of the present disclosure;
FIG. 9 is a schematic illustration of a structure of an autonomous mobile device according to an embodiment of the present disclosure.

### DETAILED EMBODIMENTS

In order to make the objective of the present disclosure, the technical solutions and advantages clearer, next, the technical solutions of the present disclosure will be clearly and comprehensively described with reference to the accompanying drawings of the present disclosure. Obviously, the described embodiments are some embodiments of the present disclosure, and are not all of the embodiments. Based on the embodiments of the present disclosure, a person having ordinary skills in the art can obtain all other embodiments without expending creative effort, which all belong to the scope of protection of the present disclosure.

Based on different types of tasks and work zones, autonomous mobile devices may need to execute tasks in some specified zones in a work zone. For example, cleaning robots may execute the cleaning tasks in a living room zone. This may require the autonomous mobile device to be able to automatically perform zone division to a work zone.

The present disclosure provides a map zone dividing method, an apparatus, an autonomous mobile device and a storage medium. The division is performed based on zone characteristics, which can enhance the efficiency and accuracy of map zone division.

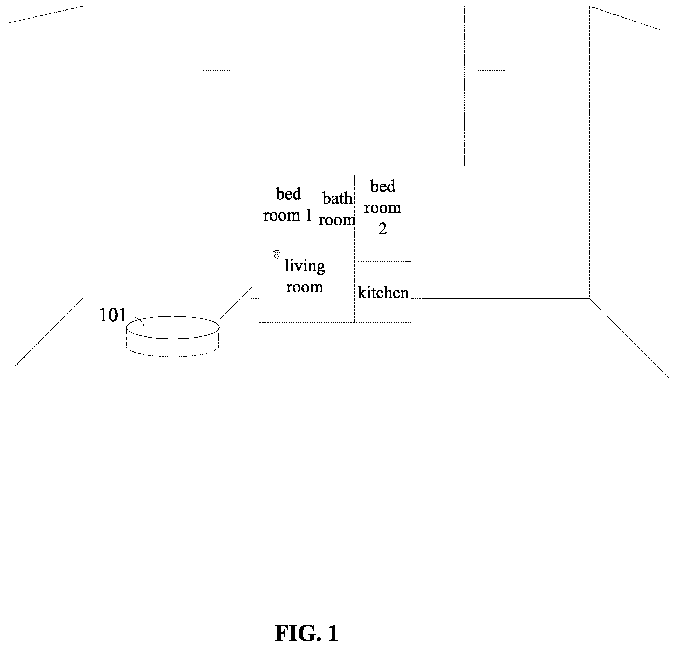

FIG. 1 is a schematic illustration of an application scene provided by the present disclosure. The autonomous mobile device of the present embodiment is a cleaning robot 101, as shown in FIG. 1, the cleaning robot 101 may execute the cleaning tasks in an indoor work zone. The cleaning robot 101 may perform automatic zone division based on the current indoor map (i.e., the map of the work zone) using the map zone dividing method of the present disclosure, determine multiple functional zones (i.e., rooms) included in the indoor space, and obtain a functional zone map. Then, cleaning task instructions may be sent to the autonomous mobile device from the UI of the terminal devices such as cell phones, computers, etc. The cleaning task instructions may include executing cleaning tasks within a selected functional zone (e.g., a living room zone) selected on the functional zone map. The cleaning instructions may also include setting, in the selected zone, the work mode corresponding to the selected zone, such as a quiet mode, a high power mode, a repeat cleaning mode, etc. The detailed implementation methods of the zone dividing process can refer to the various embodiments described below.

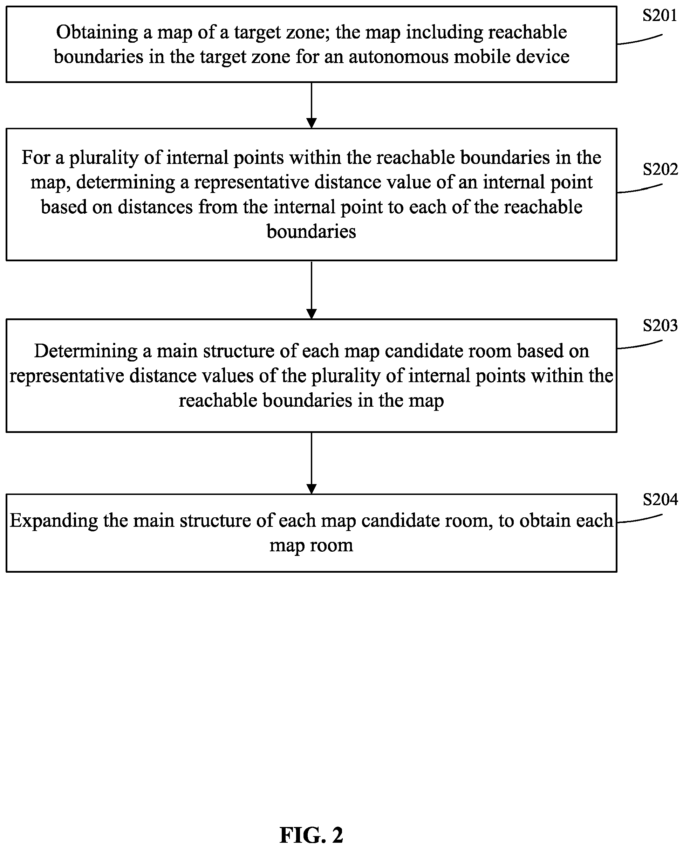

FIG. 2 is a flowchart illustrating a map zone dividing method according to an embodiment of the present disclosure. The execution body of the method of the present embodiment may be an autonomous mobile device, or a management system of the autonomous mobile device. As shown in FIG. 2, the method of the present embodiment may include:
S201, obtaining a map of a target zone; the map including reachable boundaries in the target zone for the autonomous mobile device.

The target zone is at least a partial zone in which the autonomous mobile device operates, which may be the entire indoor space of the user, or a portion of the entire indoor space, or even a portion that is a closed space or a portion of a closed space.

In some embodiments, the map may be a grid map (also referred to as a dot matrix map, a bitmap), and the autonomous mobile device generates the map of the target zone while moving in the target zone. In order to differentiate the unexplored locations, obstacle locations, reachable locations/reached locations in the map, illustratively, during the process of generating the map, at an initial time, the status values of all locations in the map are set to be initial values (which are typically consistent with the status values of unexplored zones). The autonomous mobile device moves in the target zone. Whenever the autonomous mobile device moves to a location, the status value of this location may be updated or the status values of coordinates traversed along a trajectory may be updated based on the trajectory traversed within a time period. For example, the status values of unexplored locations may be pre-set as 75 (e.g., pixel values or grayscale values; i.e., the initial values of all locations at the beginning in the present embodiment); The status values of the coordinates corresponding to reachable locations and passed locations (collectively referred to as traversable locations) may be set as 0 (e.g., the pixel values or grayscale values). The status values of the coordinates corresponding to locations that cannot be reached due to the obstruction by obstacles (simply referred to as unreachable locations) may be set or updated as 100 (e.g., pixel values or grayscale values). As such, in the map of the target zone, the crossing boundaries between the traversable zones that have status values of 0 and the unreachable zones that have status values of 100 are the reachable boundaries of the autonomous mobile device in the target zone. Typically, for the convenience of calculation, a location of a traversable zone having a status value of 0 that is adjacent to a location of an unreachable zone having a status value of 100 may be defined as the reachable boundary. Alternatively, a location of an unreachable zone having a status value of 100 that is adjacent to a location of a traversable zone having a status value of 0 may be set as the reachable boundary. Therefore, the points in the map of the target zone may be divided into two categories, traversable locations of the autonomous mobile device (also referred to as internal points) and unreachable locations of the autonomous mobile device (e.g., locations of obstacles and obstacle zones in a closed curve formed by sequentially connecting adjacent obstacle locations are all locations unreachable by the autonomous mobile device, points within the closed curve may be referred to as unreachable points). It should be understood that, the map also can be a vector map, and a person having ordinary skills in the art can know the existing technologies for implementing the above technical solutions.

When the execution main body of the present embodiment is an autonomous mobile device, the map of the target zone that has already been generated by the device may be obtained, or the map of the target zone that has already been generated and stored may be obtained from a storage device of the autonomous mobile device itself or an external storage device (e.g., a server, a distributed storage system, a computer, a cell phone or another autonomous mobile device, etc.).

When the execution main body of the present embodiment is a management system of the autonomous mobile device (e.g., a server), the map of the target zone stored by the system may be obtained, or the already generated map of the target zone uploaded by the autonomous mobile device may be received.

In some embodiments, the map of the target zone may be a map edited by a user. For example, the user may obtain, on a cell phone or computer, a historical map from an autonomous mobile device through a network or a wired connection. The historical map may be edited through operations such as addition, modification, deletion, etc., and the edited map may be stored on a device or a server or a storage device used by the user, or may be transmitted to the autonomous mobile device.

S202, for a plurality of internal points within the reachable boundaries in the map, determining a representative distance value of an internal point based on distances from the internal point to each of the reachable boundaries.

The plurality of internal points may be selected from internal points of a reachable zone portion in the map. Specifically, in each row and/or each column, the plurality of internal points may be selected by selecting one or more internal points at an interval of every one or more internal points.

Illustratively, the plurality of internal points may be selected as all internal points within the target zone in the map. Specifically, every internal point may be traversed. For example, starting from an internal point adjacent to a reachable boundary, points in this row or this column may be selected. Then, the row number or column number may be gradually increased, until all internal points in the traversable zone have been traversed. During this process, distances from each selected internal point to each of the reachable boundaries may be calculated.

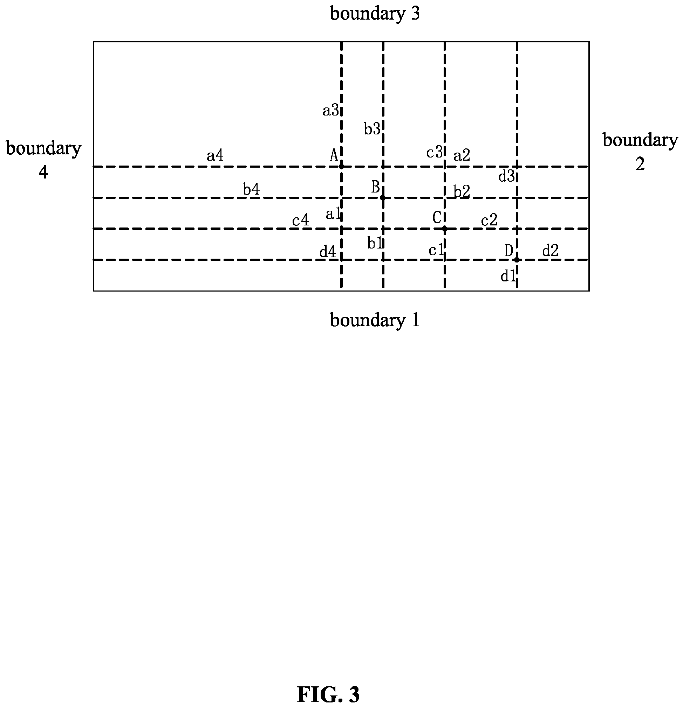

The distances from an internal point to each of the reachable boundaries refer to the distances from the internal point to the reachable boundaries within the map of the target zone, which may be distances from the internal point to each point on each of the reachable boundaries (which will be multiple distances), or may be a distance from the internal point to a point on each of the reachable boundaries that satisfies a predetermined condition. For example, a line passing through the internal point and perpendicular to a reachable boundary may cross with the reachable boundary at a crossing point. The length of a perpendicular line segment between the internal point and the crossing point on the line may be the distance from the internal point to the reachable boundary. For the convenience of description, the distance from the internal point to a certain reachable boundary obtained through this method may be referred to as a perpendicular distance. At this moment, the perpendicular distance is a single distance, i.e., the number of distances from the internal point to the reachable boundary may be one, i.e., the perpendicular distance. However, typically, the number of reachable boundaries of an internal point is more than one. As shown in FIG. 3, each internal point A, B, C, and D has 4 reachable boundaries. Therefore, for an internal point, there are typically multiple distances from the internal point to the reachable boundaries. In the above example of perpendicular distance, the number of the perpendicular distances is the same as the number of reachable boundaries.

The representative distance value of each internal point may be determined based on the distances from each internal point to each of the reachable boundaries. Illustratively, the representative distance value may be set as a shortest distance of the distances from the internal point to each of the reachable boundaries. For example, as shown in FIG. 3, according to the above embodiment, the perpendicular distances from the point C to each of the reachable boundaries 1 to 4 may be obtained as c1, c2, c3 and c4 respectively. As seen in FIG. 3, c1 is the shortest. Then the length of c1 may be the representative distance value of internal point C. Obviously, for an internal point, the representative distance value can only be a single value.

In a closed planar space, the internal points typically show the following characteristics, i.e., the perpendicular distances from the point located closest to the center location to each of the reachable boundaries are relatively uniform, manifested as the maximum value of the perpendicular distances being relatively small and the minimum value of the perpendicular distances being relatively large. The closer the internal point is to the reachable boundaries in an outward direction from the center, the larger the differences between the distances from the point to each of the reachable boundaries, manifested as the maximum value of the perpendicular distances getting larger and larger, and the minimum value getting smaller and smaller. Using FIG. 3 as an example, the black side frame in FIG. 3 indicates the reachable boundaries, i.e., the reachable boundary 1, the reachable boundary 2, the reachable boundary 3, the reachable boundary 4. Point A is an internal point that is closer to the center of the traversable zone, and with BCD, the four internal points sequentially get closer and closer to the reachable boundary 1. The perpendicular distances from point A to the four reachable boundaries are a1, a2, a3, a4, respectively. The perpendicular distances from point B to the four reachable boundaries are b 1, b2, b3, b4, respectively. The perpendicular distances from point C to the four reachable boundaries are c1, c2, c3, c4, respectively. The perpendicular distances from point D to the four reachable boundaries are d1, d2, d3, d4, respectively. As can be seen from the figure, a1(=a3)>b1>c1>d1, a4(=a2)<b4<c4<d4. That is, from point A to point D, the minimum value of the perpendicular distances from the internal points to the four reachable boundaries gets smaller and smaller, and the maximum value gets larger and larger.

From this it can be determined that the distance from an internal point to the multiple reachable boundaries may indicate the distribution information of the planar space at a certain degree.

Correspondingly, the maximum value of the distances from an internal point to each of the reachable boundaries may be set as the representative distance value of the internal point. In a map space of the target zone, the representative distance value of an internal point that is closer to the center is smaller. In an outward direction from the center, the closer an internal point is to a reachable boundary, the larger the representative distance value.

Alternatively, the minimum value of the distances from an internal point to each of the reachable boundaries may be set as the representative distance value of the internal point. In the map space of the target zone, the representative distance value of the internal point that is closer to the center is larger. In an outward direction from the center, the closer the internal point is to a certain reachable boundary, the smaller the representative distance value.

S203, determining a main structure of each map candidate room based on representative distance values of a plurality of internal points within the reachable boundaries in the map.

In the present disclosure, the term "map candidate room" refers to, when the map is processed, non-overlapping zone divisions that are temporarily partitioned from the map based on the location of the internal point and its representative distance value. It should be noted that the present disclosure only uses "room" as another name for each zone division obtained during the map processing, and does not limit the application of the technical solutions of the present disclosure to indoor home. The zone division does not necessarily have one-to-one correspondence with actual indoor functional zones.

Because a location of an internal point and its representative distance value illustrate the relative location relationship between the internal point and each of the reachable boundaries, multiple internal points may be selected based on the representative distance values of the internal points, to form a main structure of a map candidate room. The main structure of the map candidate room can approximately illustrate the rough shape and location of each zone division in the map.

S204, expanding the main structure of the map candidate room, to obtain each map room.

A map room refers to a map zone obtained when outward expansion of the main structure of the map candidate room cannot be further performed.

Specifically, the main structure of each map candidate room may be expanded. A condition that stops the expansion certainly is that the boundary of the expanded main structure of the map candidate room (also referred to as an expanded main structure) contacts an expanded main structure of another map candidate room, to form a main structure crossing border, or the boundary of the expanded main structure contacts the reachable boundaries of the map, to obtain a main structure boundary. The main structure crossing border between the map rooms refers to a connecting portion in the map between two interconnected map rooms, which may correspond to a "door" between two actual rooms in an actual target zone, or which may be a relatively narrower portion between two relatively wider portions of a same room, rather than an actual door. The main structure boundary obtained by the expanded main structure of the map candidate room encountering the reachable boundaries of the map refers to the boundary limits surrounding each map room that are not in contact with other map rooms, the corresponding zone of which in the actual target zone may be a "wall" or an obstacle standing against the wall (e.g., furniture standing against the wall such as a cabinet, a sofa, a TV stand, a refrigerator, an air conditioner, a bed, etc.). Because the locations of the wall and the furniture standing against the wall in the actual target zone are obstacle locations, they may block the expansion of the main structure of the map candidate room. The unreachable locations that block the expansion of the main structure form the main structure boundary.

The map zone dividing method of the present disclosure includes: obtaining a map of a target zone; the map includes reachable boundaries in the target zone for the autonomous mobile device; for a plurality of internal points within the reachable boundaries in the map, determining a representative distance value of an internal point based on distances from the internal point to each of the reachable boundaries; determining a main structure of a map candidate room based on representative distance values of the plurality of internal points located within the reachable boundaries in the map; expanding the main structure of each map candidate room, to obtain each map room; determining a distance value of each point based on the principle of distance becoming larger and larger from the boundary to the center, and determining the main structure of each map candidate room based on the characteristics of the distribution of distance value of each point. Then through expanding the main structure of each map candidate room, a boundary for each room is further determined, thereby accomplishing the automatic zone division of the map. The method does not rely on the wall, door, etc., in the actual space as zone dividing marks, and may be applied to zone division in more application scenes. In addition, the zone division accuracy is higher.

In some embodiments, obtaining the map of the target zone, also includes: obtaining an original map of the target zone; pre-processing the original map, to obtain the map of the target zone.

The map generated by the autonomous mobile device may not satisfy the characteristics of including internal points and boundary points. Therefore, after obtaining the original map of the target zone, pre-processing may be performed to obtain the map of the target zone.

The pre-processing method may include graph binarization which turns the original map into a binary graph. In the binary graph, there are locations of the obstacles such as walls that are not reachable by the autonomous mobile device, which are processed to be black (e.g., pixel value is 0). The traversable locations of the autonomous mobile device are processed to be white (e.g., pixel value is 255). Specifically, a threshold value T may be set. The image data may be divided into two portions using T: a pixel set greater than T and a pixel set smaller than T, thereby generating the corresponding binary graph.

Processing methods such as erosion operation, dilation operation, opening computation, closing computation, morphological processing, etc., may be performed to delete fine contours/obstacles, or noise, etc., that are inside the original map.

The principle of the erosion computation is, using a convolution template B to perform a convolution computation on image A, to obtain a minimum value of pixels in a zone covered by B, and replacing a pixel value of a reference point using the minimum value. A is referred to as an object-being-processed, and B is referred to as structure element. The convolution template B may have any shape and size, and has a separately defined reference point - anchorpoint, which is typically a square or a circular disk that includes the reference point. The convolution template B may also be referred to as a template or a mask. The processing includes: laterally translating the center point of the structure element B to "a" to obtain Ba. If Ba is included in A, then the point "a" is recorded. A set formed by all points "a" that satisfy the above condition become the result of the erosion of A by B. The set of "a" is within the scope of A, and is smaller than A. Visually, the image after erosion appears to have been peeled away the outermost layer. For noise, fine contours, they are eliminated after being peeled away. Based on the characteristics of the erosion operation, it can be used to eliminate the noise, fine contours from the image. The boundary of the map after being subject to the erosion operation may become cleaner, and the structure of the wall may become clearer.

The dilation can be viewed as the dual computation of the erosion, which can be defined as: laterally translating the structure element B to "a" to obtain Ba. If Ba hits an object X that is being processed, the point "a" is recorded. A set formed by all points "a" that satisfy the above condition is referred to as a result of X being dilated by B. The result of X being dilated by B includes X. Visually, it appears that X is dilated for a round.

The opening computation is equivalent to, in principle, first performing the erosion computation and then performing the dilation computation. Based on the characteristics of the opening computation operation, typically, noise can be eliminated, such as isolated small points, rags, etc., or to separate two slightly connected targets, while the overall location and shape are maintained. Therefore, this operation smooths the contour of an object, eliminates narrow disconnections and eliminates fine protrusions, eliminates fine objects, separates objects at slender portions, and smooths the boundary of a relatively large object. The opening computation is equivalent to a geometric operation based filter. Different sizes of the structure element can cause different filtering effects. Selections of different structure elements can lead to different division effects, i.e., different characteristics may be extracted from the image.

The closing computation is equivalent to, in principle, first performing the dilation computation, and then performing the erosion computation. Based on the characteristics of the closing computation operation, small holes, bridging small cracks, or small black dots on objects may be eliminated from the inside of the foreground object, or two slightly connected image blocks may be closed, while the overall location and shape are maintained. Therefore, narrow disconnected portions are eliminated, small holes are eliminated, adjacent objects are connected, and boundary is smoothed. The closing computation is equivalent to filtering by filling a depressed corner of the image. Different sizes of the structure element can lead to different wave filtering effects.

By pre-processing the original map, the obtained map of the target zone has a boundary that is clearer, neater, and having less noise, which is beneficial to the enhancement of the accuracy of the subsequent processing.

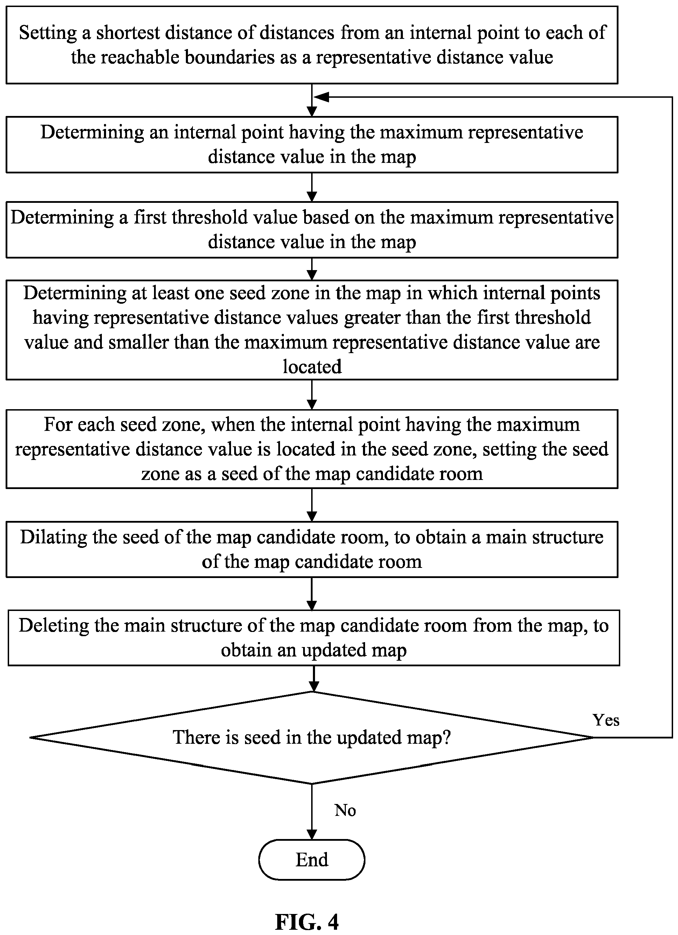

Referring to FIG. 4, specific implementations of the above-described determining a main structure of each map candidate room based on representative distance values of the plurality of internal points within the boundary in the map may include: setting a shortest distance of distances from an internal point to each of the reachable boundaries as the representative distance value; repeatedly executing the following steps until no more seed exists in the updated map: determining an internal point having the maximum representative distance value in the map; determining a first threshold value based on the maximum representative distance value in the map; the first threshold value is smaller than the maximum representative distance value; determining at least one seed zone in the map in which internal points having representative distance values that are greater than the first threshold value and smaller than the maximum representative distance value are located; for each seed zone, when the internal point having the maximum representative distance value is located within the seed zone, setting the seed zone as a seed of a map candidate room; dilating the seed of the map candidate room, to obtain a main structure of the map candidate room; deleting the main structure of the map candidate room from the map, to obtain an updated map.

From the above content, it can be known that when the shortest distance of distances from the internal point to each of the reachable boundaries is set as the representative distance value, and when an internal point having the maximum representative distance value appears in a certain zone, this zone is a map candidate room. Therefore, in the present embodiment, through looking for the internal point having the maximum representative distance value, the main structure of the map candidate room can be determined.

Specifically, a location of the internal point having the maximum representative distance value in the map may be first determined. This location is also a location of a center point of one of the map candidate rooms. Then, a first threshold value may be determined based on the maximum representative distance value. In the map, a zone in which points having representative distance values between the maximum representative distance value and the first threshold value are located may be a center zone of the map candidate room, which may be set as the seed zone. There may be multiple seed zones in the map, but only the seed zone in which the internal point having the maximum representative distance value is located is the seed of the map candidate room. The seed may be dilated, to obtain the main structure of the map candidate room. After storing the main structure of the first map candidate room, illustratively, the main structure may be deleted from the map, to obtain an updated map. If a seed still exists in the updated map, the above operations may be repeated based on the updated map, to continue determining, in the remaining portion of the map, the internal point having the maximum representative distance value, thereby determining the main structure of a second map candidate room, the main structure of a third map candidate room .... until no more seed exists in the updated map. For example, if the N^{th} determined maximum representative distance value does not satisfy the predetermined condition of the main structure, or the N^{th} determined main structure of the map candidate room does not satisfy the predetermined condition of the main structure, then it may be determined that there is no more seed in the updated map.

Illustratively, the condition for setting the first threshold value may be: the seed zone includes a number of (e.g., 6) internal points having representative distance values greater than the first threshold value, such that these internal points in the seed zone can form an approximate contour of the seed zone.

Another method to determine the seed of the map candidate room may be: after determining the location of the internal point in the map having the maximum representative distance value, determining the first threshold value based on the maximum representative distance value; the first threshold value is smaller than the maximum representative distance value. Using the location of the internal point having the maximum representative distance value as a base, traversing each point outwardly, until any point and other points surrounding this point have representative distance values all smaller than or equal to the first threshold value. Then the process is stopped. Because a zone in which the traversed points are located includes the internal point having the maximum representative distance value, this seed zone is the seed of the map candidate room.

The first threshold value may be n times of the maximum representative distance value, where the value of n may be an empirical value, which is typically a positive number smaller than 1. For example, the maximum representative distance value may be 1000, n may be 0.8, then the first threshold value may be 800. In some embodiments, the value of n may be limited by the minimum representative distance value in the map. That is, the value of n may not render the first threshold value smaller than the minimum representative distance value in the map.

In addition, for a zone that may be called an independent room, the geometric parameters such as the length, the area, etc., may need to satisfy a certain condition. For example, the area may be not less than 4 square meters, etc. Correspondingly, conditions may be set to require that the maximum representative distance value is not smaller than 2 meters, or the area of the main structure of the candidate room is not smaller than 3 square meters. Correspondingly, such a condition may be used as the specific determination condition in the step of "there is seed in the updated map" in the embodiment shown in FIG. 4.

In some embodiments, corresponding to the above embodiment, determining the main structure of each map candidate room based on representative distance values of the plurality of internal points within the reachable boundaries in the map, includes: setting a longest distance of distances from an internal point to each of the reachable boundaries as a representative distance value; repeatedly executing the following steps, until no more seed exists in the updated map: determining an internal point having the minimum representative distance value in the map; determining a second threshold value based on the minimum representative distance value in the map, the second threshold value being greater than the minimum representative distance value; determining at least one seed zone in the map in which internal points having representative distance values that are smaller than the second threshold value and greater than the minimum representative distance value are located; for each seed zone, when an internal point having the minimum representative distance value is located within the seed zone, setting the seed zone as a seed of the map candidate room; dilating the seed of the map candidate room, to obtain the main structure of the map candidate room; after storing the main structure of the map candidate room, illustratively, deleting the main structure of the map candidate room from the map, to obtain an updated map.

It can be known from the above content, when the shortest distance of the distances from the internal point to each of the reachable boundaries is set as the representative distance value, when an internal point having the minimum representative distance value appears in a certain zone, this zone is a map candidate room. Therefore, in this embodiment, through looking for the internal point having the minimum representative distance value, the main structure of the map candidate room can be determined.

Specifically, a location of an internal point having the minimum representative distance value in the map may be first determined. This location is the location of the center point of one of the map candidate rooms. Then a second threshold value may be determined based on the minimum representative distance value. In the map, a zone in which points having representative distance values between the minimum representative distance value and the second threshold value are located may be the center zone of the map candidate room, which may be set as the seed zone. There may be multiple seed zones in the map, but only the seed zone in which the internal point having the minimum representative distance value is located is the zone of the map candidate room, i.e., the seed of the map candidate room. Dilating the seed to obtain the main structure of the map candidate room. After storing the main structure of a first room, illustratively, the main structure may be deleted from the map, to obtain an updated map. If there exists a seed in the updated map, the above operations may be repeated based on the updated map, to continue determining, in the remaining portion of the map, the internal point having the minimum representative distance value, thereby determining the main structure of a second map candidate room, the main structure of a third map candidate room .... until there is no more seed in the updated map, for example, the N^{th} determined minimum representative distance value does not satisfy a predetermined condition of the main structure, or the N^{th} determined main structure of the map candidate room does not satisfy a predetermined condition of the main structure.

Illustratively, a condition for setting the second threshold value may be: the seed zone includes multiple (e.g., 6) internal points having representative distance values smaller than the second threshold value, such that these internal points in the seed zone can form a rough contour of the seed zone.

Another method for determining the seed of the map candidate room is, after determining the location of the internal point having the minimum representative distance value in the map, determining the second threshold value based on the minimum representative distance value. Then, using the location of the internal point having the minimum representative distance value as a base, outwardly traversing each point, until for any point and other points surrounding this point, the representative distance values are all greater than or equal to the second threshold value. Then the traversing is stopped. Because a zone in which the traversed points are located includes the internal point having the minimum representative distance value, this seed zone is the seed of the map candidate room.

The second threshold value may be n times of the minimum representative distance value. The value of n may be an empirical value, which is typically a positive number greater than 1. For example, when the minimum representative distance value is 100, n is 2, then the second threshold value is 200. In the meantime, under this condition, the value of n is also limited by the maximum representative distance value in the map. That is, the value of n may not render the second threshold value greater than the maximum representative distance value in the map.

In some embodiments, the detailed implementations of expanding the main structure of each map candidate room to obtain each map room may include: expanding the main structure of each map candidate room at the same time and at the same predetermined speed, to form an expanded main structure; when an expanded main structure of a map candidate room encounters an expanded main structure of another map candidate room to form a main structure crossing border, or when the main structure of the map candidate room encounters a reachable boundary of the map to form a main structure boundary, then stopping the expansion, to obtain each map room.

Expanding the main structure of each map candidate room at the same time and at the same predetermined speed to form the expanded main structure, means that the main structure of each map candidate room is expanded outwardly in every direction at the same time, while the same expanding speed is maintained. The main structure of the map candidate room during the expansion is referred to as the expanded main structure. The condition for stopping the expansion is, a certain expanded main structure encounters another expanded main structure to form a main structure crossing border, or the expanded main structure encounters a reachable boundary of the map to form a main structure boundary.

Specifically, based on the initially obtained map of the target zone, the main structure of each map candidate room that has already been determined and stored may be filled to the corresponding location in the map. When filling, illustratively, the filling using each map candidate room may be performed with a unique identifier that distinguishes the main structure of each map candidate room from the main structures of other map candidate rooms. For example, the filling may be performed using different pixel values or different symbols (different characters or different numbers).

Then, for the main structure of each map candidate room, based on each point located therein, an outward expansion may be performed. For each point, a determination may be made to determine whether each other surrounding and adjacent point carries the unique identifier of the main structure of this map candidate room, or carries another unique identifier of the main structure of another map candidate room, or whether it is a point of a reachable boundary, or whether it is an internal point. In the expansion process, if for each point it is determined that an internal point exists in the other surrounding and adjacent points, then the unique identifier of the main structure of this map candidate room is added to these internal points, to make these internal points become the points of the main structure of this map candidate room. As such, the outward expansion of the main structure of the map candidate room can be achieved. In the process of expansion, if it is determined for an expansion periphery of the map candidate room, that no internal point exists in each surrounding and adjacent point, then the expansion is stopped. Typically, the expansion is stopped under two conditions. The first condition is, points external to the expanded main structure of the map candidate room carry a unique identifier of another map candidate room. At this moment, a corresponding condition is, the expanded main structure of this map candidate room encounters the expanded main structure of another map candidate room to form a main structure crossing border. A second condition is, points external to the expanded main structure of this map candidate room are unreachable points. That is, the main structure of this map candidate room encounters the reachable boundaries of the map to form a main structure boundary.

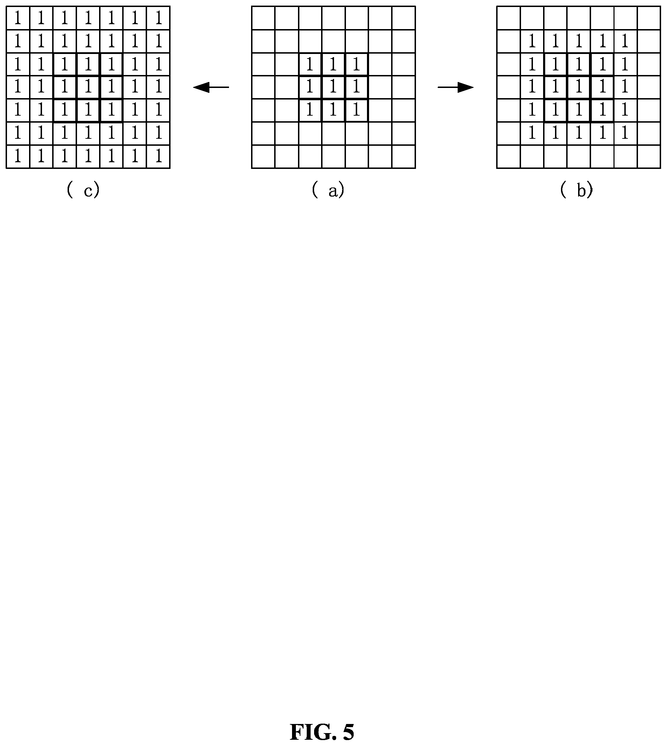

During the expansion process, the expansion speed may be controlled based on the scope of a modified point at each time. Referring to FIG. 5, the point labelled as 1 may be a main structure of a "map candidate room a." Sub-figure (a) in FIG. 5 is a schematic illustration of the initial status of the main structure. Sub-figure (b) in FIG. 5 is a schematic illustration of an expanded main structure of the "map candidate room a" after expanding for one time at a first speed. The first speed is expanding outwardly at a scale of one unit (for example, the unit may be one pixel point, the first speed may be 1 pixel/time, or 1 pixel/second). Sub-figure (c) in FIG. 5 is a schematic illustration of an expanded main structure of the "map candidate room a" after expanding for one time at a second speed. The second speed is expanding outwardly at a scale of two units (for example, the unit may be two pixel points, the second speed may be 2 pixels/time, or 2 pixels/second).

After the expansion is completed, each map room is obtained. For the main structure crossing border between the map rooms or the main structure boundary between the map rooms and the reachable boundaries of the target map, modifications may be performed.

In some embodiments, after the main structure of each map candidate room is expanded to obtain each map room, the map rooms may be fused to obtain post-fusion map rooms, such that the final map better fits the functional zone division in an actual target zone.

Some rooms may be mistakenly divided out during the process of expanding the map candidate rooms to obtain the map rooms. Characteristics of the map candidate rooms may be analyzed, such that the rooms that may be mistakenly divided out can be fused, to correct the zone division result. The above-described main structure crossing border between the map rooms, refers to a connecting portion in the map between two interconnected map rooms, which may correspond to a "door" between two actual rooms in an actual target zone, or which may be a relatively narrower portion between two relatively wider portions of a same room, rather than an actual door. The objective of the fusion is to combine two map rooms in the map located at two sides of the main structure crossing border, which may not correspond to a "door" in an actual functional zone, into a single room, such that the map after zone division better and more accurately matches the division of the functional zones in the actual target zone. The above-described main structure boundary obtained through the expanded main structure of the map candidate room encountering the reachable boundary of the map, refers to the boundary limits surrounding each map room that are not in contact with other map rooms. The corresponding zone in the actual target zone which corresponds to the main structure boundary may be a "wall" or an obstacle standing against the wall (e.g., furniture that stands against the wall, such as a cabinet, a sofa, a TV stand, a refrigerator, an air conditioner, a bed, etc.). Because the locations of the wall and the furniture standing against the wall in the actual target zone are obstacle locations, which may block the expansion of the main structure of the map candidate room, the unreachable locations that block the expansion of the main structure form the main structure boundary. In a situation where the wall or furniture standing against the wall divides two actual rooms into two different functional zones, typically, the location in the map corresponding to the wall or the furniture standing against the wall is not a line, but is a two-dimensional shape. Therefore, this obstacle necessarily respectively forms main structure boundaries with the map rooms located at two sides of the obstacle. Therefore, two zones located at two sides of the obstacle and connected with the obstacle through main structure boundaries may not be fused. Next, an introduction will be provided to the fusion of the map rooms based on the definitions and explanations of the main structure crossing border and the main structure boundary.

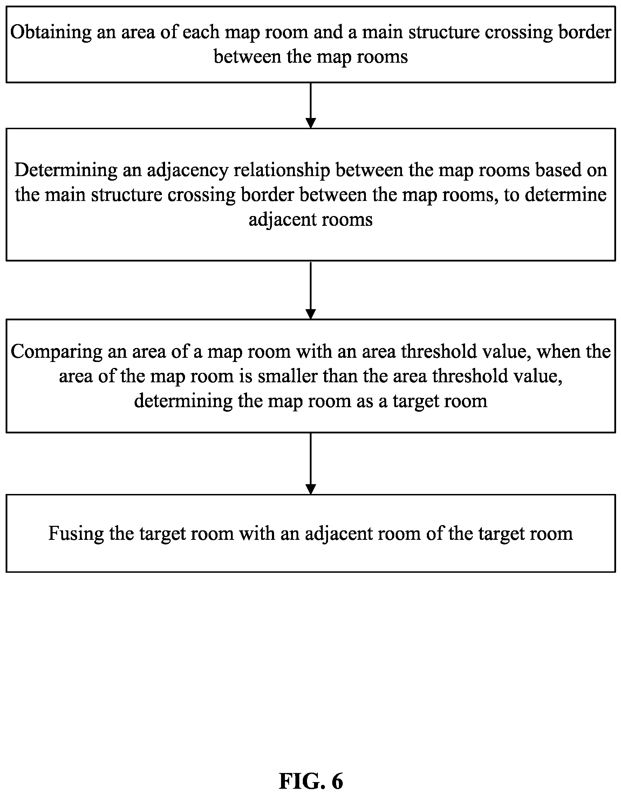

In an embodiment, referring to FIG. 6, the implementation of fusing the map rooms to obtain post-fusion map rooms may include: obtaining an area of each map room and a main structure crossing border between the map rooms; determining an adjacency relationship between the map rooms based on the main structure crossing border between the map rooms, to determine adjacent rooms; comparing an area of a map room with an area threshold value, when the area of the map room is smaller than the area threshold value, determining the map room as a target room; fusing the target room with an adjacent room of the target room to obtain a post-fusion map room.

In this embodiment, through determining the area of a map room, a determination may be made as to whether the map room may be a result of a mistaken division. If the area of the map room is overly small, then in reality, it cannot be a separate room, but is a portion that is mistakenly divided out from another room. In this embodiment, a map room having an area that is obviously smaller than the reasonable threshold value is referred to as a target room. After determining the target room, based on map rooms adjacent to the target room, a room that the target room may belong to may be determined, and the two map rooms may be fused into a same map room. The map room obtained after the fusion, for the purpose of differentiation, may be referred to as a post-fusion map room. Therefore, the final map after the fusion step is a map including divisions formed by map rooms that do not need to be fused and therefore have not been fused and post-fusion map rooms. Because the main structure crossing border shows the connectivity between two map rooms located at two sides of the main structure crossing border, i.e., if two map rooms are interconnected, the portion located between the two rooms are necessarily the main structure crossing border. Therefore, based on the target room and adjacent rooms of the shared main structure crossing border of the target room, map rooms that may be fused may be determined. Because a target room may be an adjacent room to multiple map rooms, one of the adjacent rooms of the target room may be selected for the fusion, or the adjacent room having the largest area may be selected to fuse with the target room.

For example, a main structure crossing border L1 exists between a map room H1 and a map room H2. It indicates that rooms in the actual target zone corresponding to the map room H1 and map room H2 are interconnected. Thus, it can be known that the map room H1 and map room H2 are adjacent rooms. If the area of the map room H1 is smaller than the area threshold value, then the map room H1 is the target room. The map room H1 may be fused with an adjacent room, i.e., the map room H2, into a single room, to obtain a post-fusion map room H3.

In addition, the sequence in FIG. 6 is merely one example. In some embodiments, a determination as to whether the map room is a target room may be made through first comparing the area of the map room with the area threshold value. After determining that the area of the map room is smaller than the area threshold value, the map room is then determined as the target room. An adjacency relationship between map rooms may be determined based on the main structure crossing border between the map rooms, to determine adjacent rooms. Finally, the target room may be fused with its adjacent room.

After executing the zone dividing method of the above embodiments, the final map corresponding to the zone dividing result may be shown on the terminal device of the user, such that the user may inquire about the map. In the meantime, the user may be provided with adjustment operations on the zone dividing result. If the user believes that there is an error in the zone division, the user may input an adjustment instruction at the user interface, or directly adjust the final map on the UI, to further adjust the size, location of the room. In addition, the user may input label instructions through the user interface, to add a label to a room, for indicating the property of the room. When creating tasks for the autonomous mobile device, specific tasks may be created based on the room property, for example, "cleaning the living room." Through recognizing the instructions, the autonomous mobile device may determine that the task to be executed is "cleaning," and the scope of the task execution is "living room."

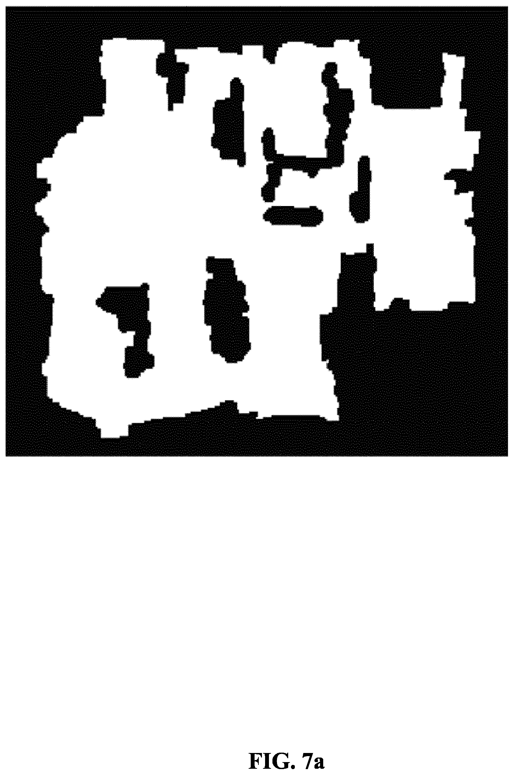

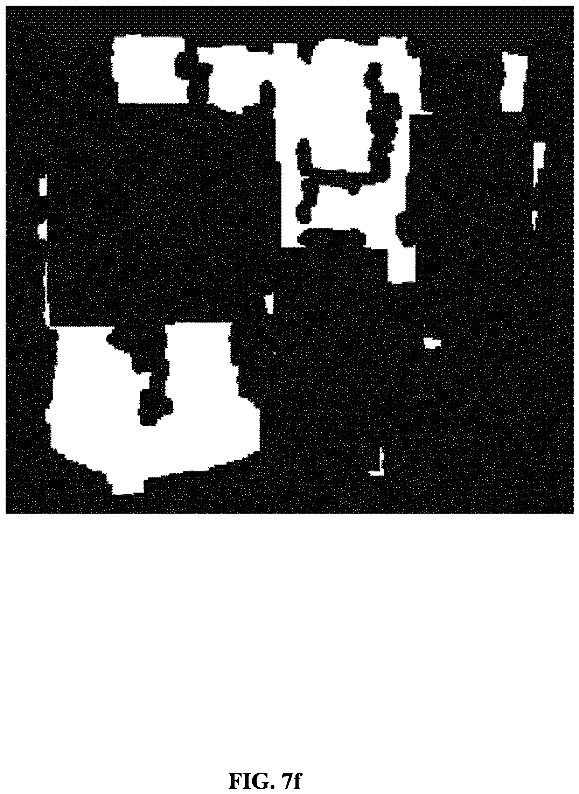

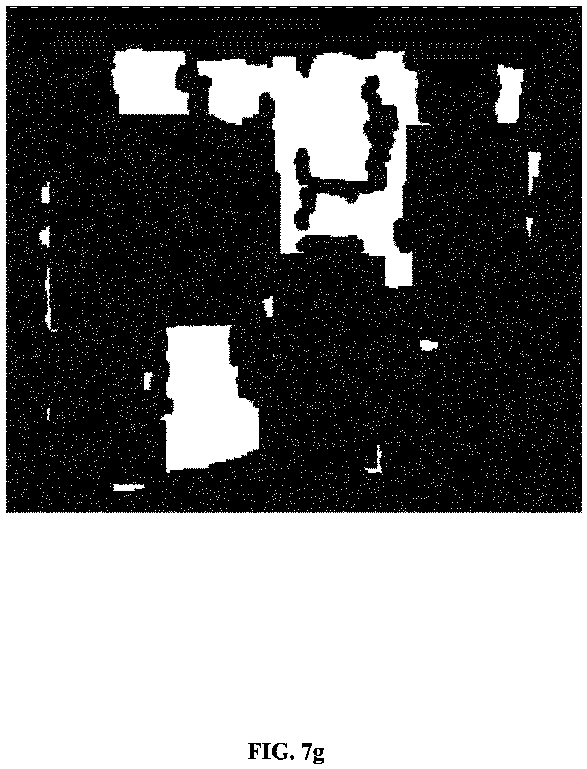

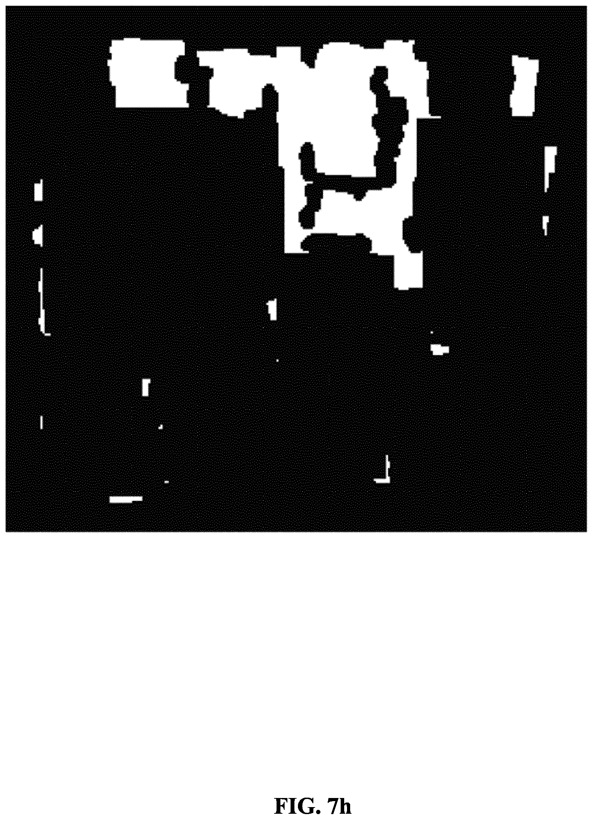

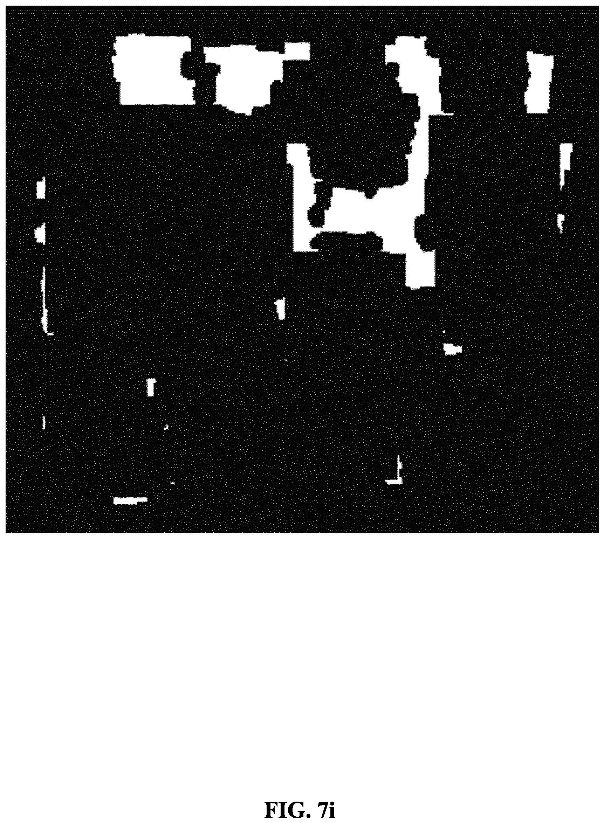

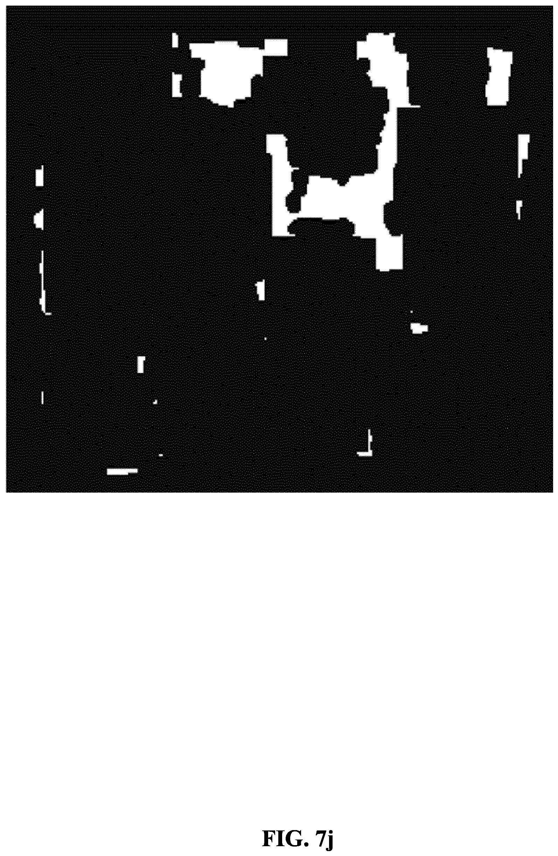

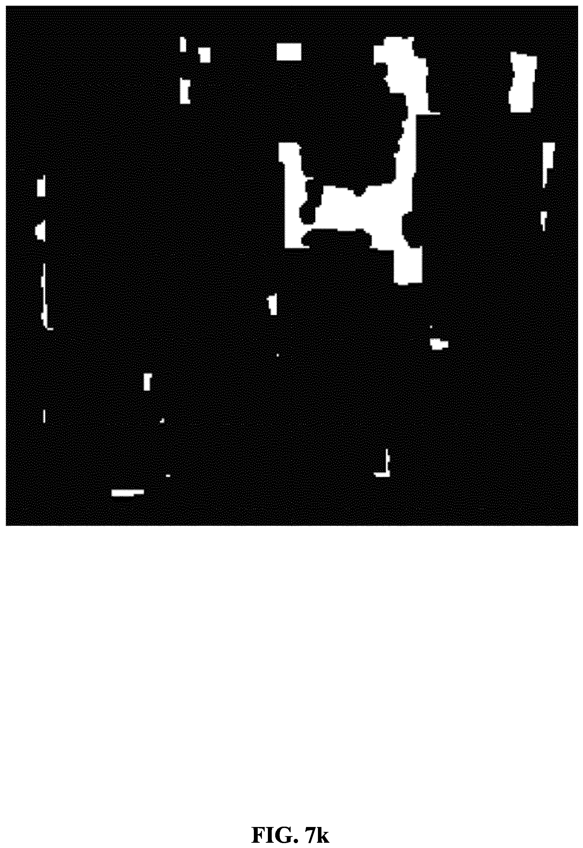

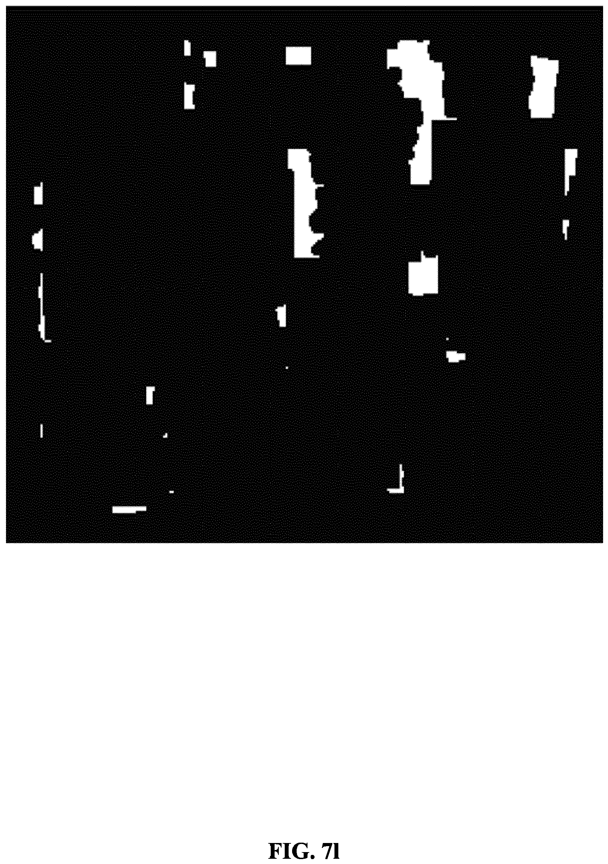

In a specific embodiment, a zone division may be performed on the target zone. The map of the target zone is shown in FIG. 7a, which may be referred to as a handled map. This map is an image that has already been pre-processed. It can be seen that the boundary in the image is relatively clear, and almost has no noise.

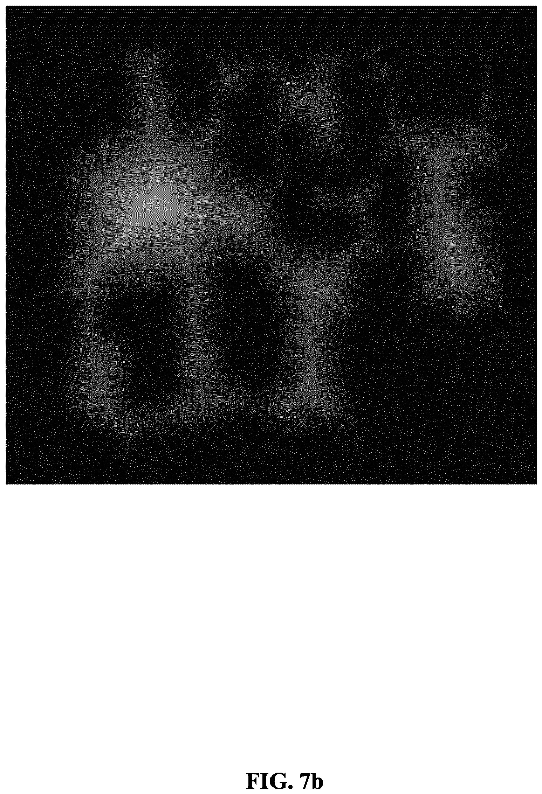

For the handled map, a minimum value of distances from each point to each boundary may be calculated, and is set as the distance value of this point. A corresponding distance graph may be generated, as shown in FIG. 7b.

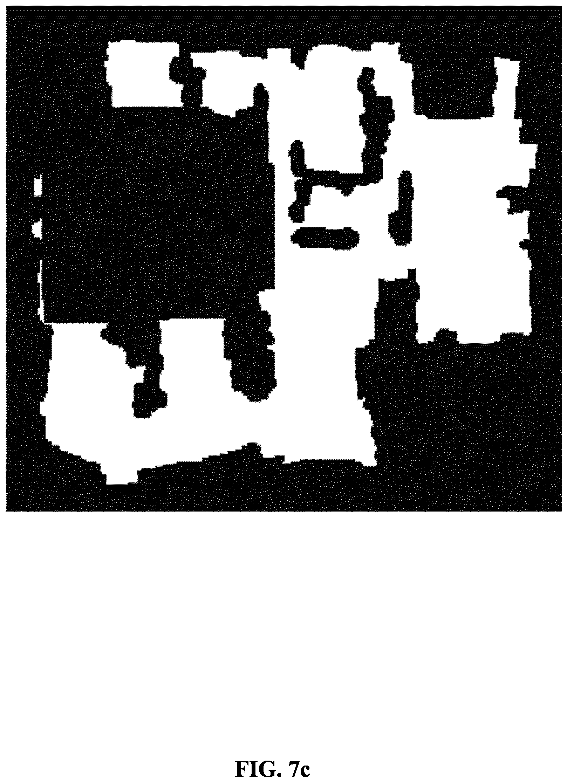

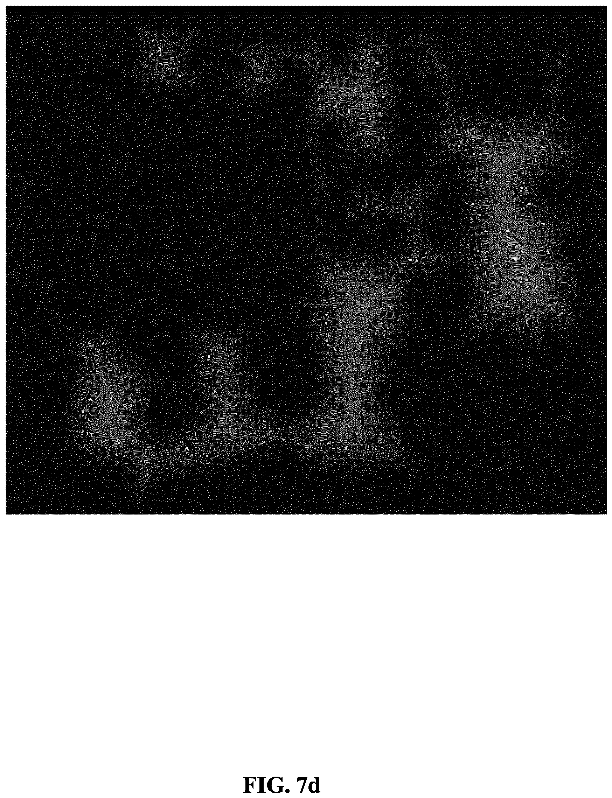

A location of a point having the maximum distance value in the map may be determined. A zone including points that surround the point having the maximum distance value and that have distance values greater than 60% of the maximum distance value may be set as the seed of a first room. The area of the seed of the first room is greater than 2 square meters, the length is greater than 1 meter, the width is greater than 0.5 meter. The obtained seed of the first room is dilated, to obtain the location and shape of the main structure of the first room. Then, the main structure of the first room is deleted from the handled map, to obtain a new handled map, as shown in FIG. 7c. The new corresponding distance graph is shown in FIG. 7d.

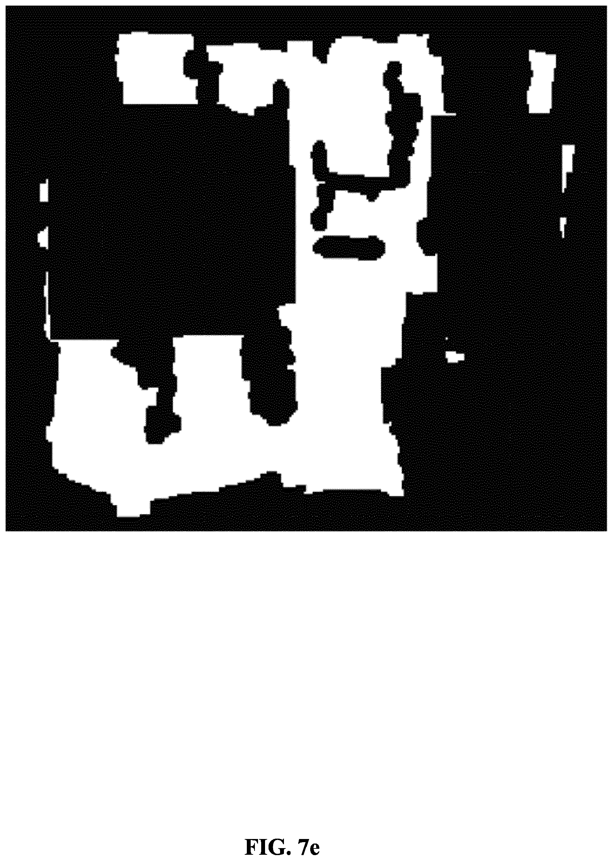

The above operations are repeated, until there is no more seed in the handled map that satisfies the above geometric condition. The handled map generated during the processes are shown in FIG. 7e to FIG. 7l.

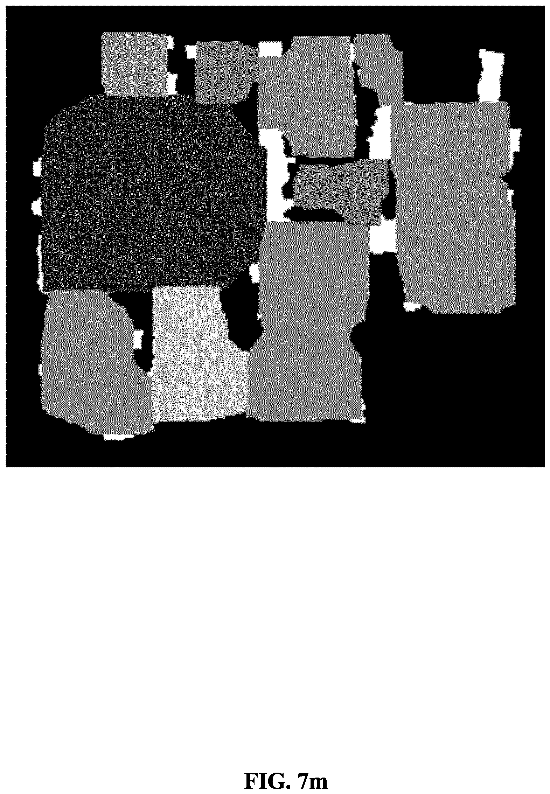

The obtained main structures of all of the rooms are superposed onto the handled map, to form a seed map. Each room is indicated with different grayscale values, as shown in FIG. 7m.

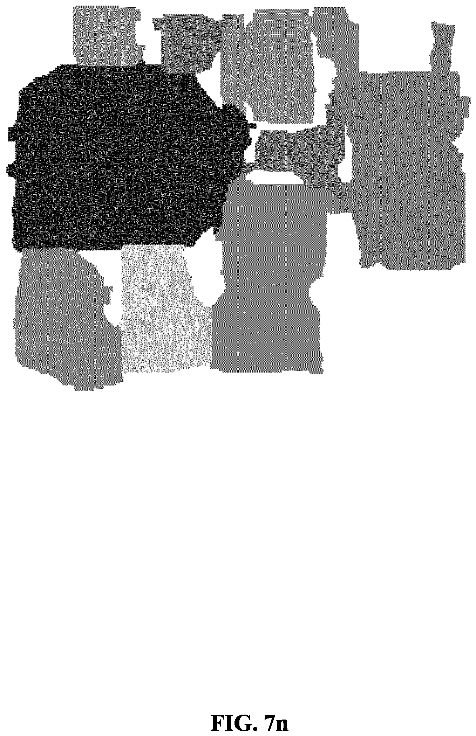

The main structure may be expanded based on the seed map using a flood fill algorithm, to obtain a label map of each room, as shown in FIG. 7n. As such, the zone division of the target zone is completed.

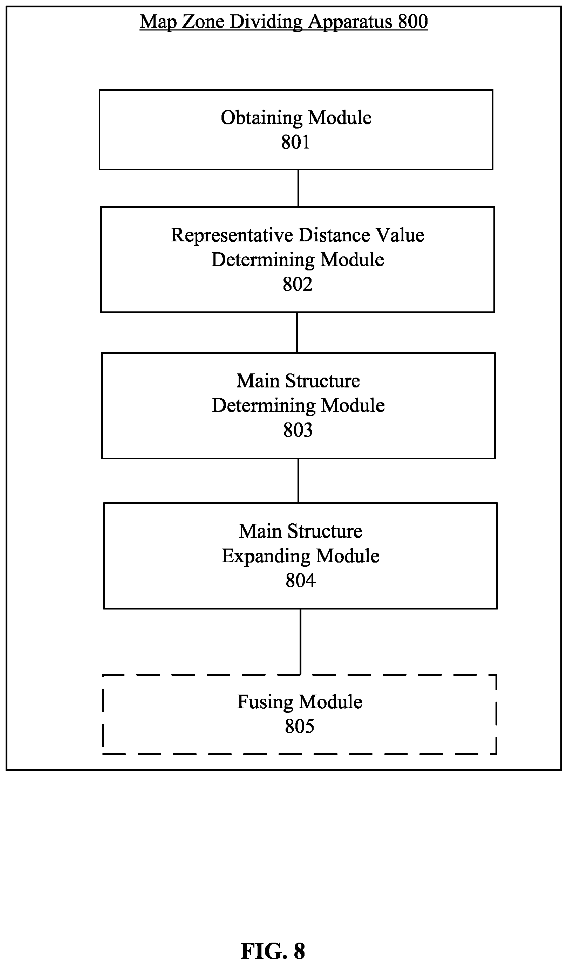

FIG. 8 is a schematic illustration of the structure of a map zone dividing apparatus according to an embodiment of the present disclosure. As shown in FIG. 8, a map zone dividing apparatus 800 of this embodiment may include: an obtaining module 801, a representative distance value determining module 802, a main structure determining module 803 and a main structure expanding module 804.

The obtaining module 801, is configured to obtain a map of a target zone; the map including reachable boundaries in the target zone for the autonomous mobile device;

The representative distance value determining module 802, is configured to determine, for a plurality of internal points within the reachable boundaries in the map, a representative distance value for an internal point based on distances from the internal point to each of the reachable boundaries;

The main structure determining module 803, is configured to determine a main structure of each map candidate room based on the representative distance values of the plurality of internal points within the reachable boundaries in the map.

The main structure expanding module 804, is configured to expand the main structure of each map candidate room, to obtain each map room.

Optionally, the main structure determining module 803 is specifically configured to:
set a shortest distance of distances from the internal point to each of the reachable boundaries as the representative distance value;
repeatedly execute the following steps, until no more seed exists in the updated map:
determining an internal point having the maximum representative distance value in the map;
determining a first threshold value based on the maximum representative distance value in the map; the first threshold value being smaller than the maximum representative distance value;
determining at least one seed zone in the map in which internal points having representative distance values greater than the first threshold value and smaller than the maximum representative distance value are located;
for each seed zone, when an internal point having the maximum representative distance value is located within the seed zone, setting the seed zone as a seed of the map candidate room;
dilating the seed of the map candidate room, to obtain a main structure of the map candidate room;
deleting the main structure of the map candidate room from the map, to obtain an updated map.

Optionally, the main structure determining module 803 is specifically configured to:
set a longest distance of distances from the internal point to each of the reachable boundaries as the representative distance value;
repeatedly execute the following steps, until no more seed exists in the updated map:
determining an internal point having the minimum representative distance value in the map;
determining a second threshold value based on the minimum representative distance value in the map; the second threshold value being greater than the minimum representative distance value;
determining at least one seed zone in the map in which internal points having representative distance values smaller than the second threshold value and greater than the minimum representative distance value are located;
for each seed zone, when an internal point having the minimum representative distance value is located within the seed zone, setting the seed zone as a seed of the map candidate room;
dilating the seed of the map candidate room, to obtain the main structure of the map candidate room;
deleting the main structure of the map candidate room from the map, to obtain an updated map.

Optionally, the main structure expanding module 804 is specifically configured to:
expand the main structure of each map candidate room at the same time and at the same predetermined speed, to obtain an expanded main structure;
when an expanded main structure of a map candidate room encounters another expanded main structure of another map candidate room to form a main structure crossing border, or when the expanded main structure of the map candidate room encounters a reachable boundary of the map, stop expansion, to obtain each map room.

Optionally, the apparatus also includes: a fusing module 805, configured to, after expanding the main structure of each map candidate room to obtain each map room, fuse each map room, to obtain a post-fusion map room.

Optionally, when the fusing module 805 fuses each map candidate room, the fusing module is specifically configured to:
obtain an area of each map room and a main structure crossing border between the map rooms;
determine an adjacency relationship between map rooms based on the main structure crossing border between the map rooms, to determine adjacent rooms;
compare an area of a map room with an area threshold value, when the area of the map room is smaller than the area threshold value, determine that the map room is a target room;
fuse the target room with an adjacent room to obtain a post-fusion map room.

Optionally, the obtaining module 801 is specifically configured to:
obtain an original map of the target zone;
pre-process the original map, to obtain the map of the target zone.

The apparatus of this embodiment may be configured to execute the method of any of the above embodiments. The realization principle and technical effects are similar, which are not repeated.

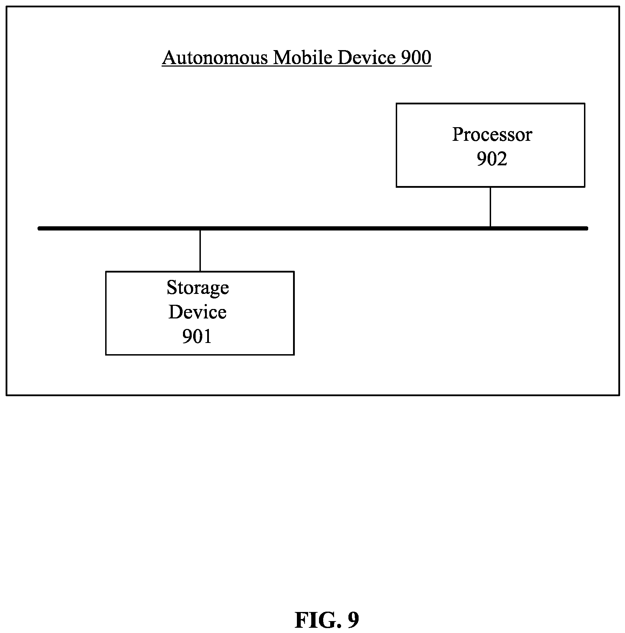

FIG. 9 is a schematic illustration of a structure of an autonomous mobile device according to an embodiment of the present disclosure. As shown in FIG. 9, an autonomous mobile device 900 of this embodiment may include: a storage device 901, a processor 902.

The storage device 901 may be configured to store program instructions.

The processor 902, may be configured to retrieve the program instructions stored in the storage device 901 and execute the program instructions, to execute the method of any of the above-described embodiment. The realization principle and technical effects are similar, which are not repeated.

The present disclosure also provides a computer-readable storage medium. The storage medium stores a computer program. When the computer program is executed by a processor, the method of any of the above-described embodiment can be performed.

The present disclosure also provides a computer program product, including a computer program. When the computer program is executed by a processor, the method of any of the above-described embodiments may be performed.

In all of the above embodiments, the map of the target zone mentioned above is explained using a dot matrix graph, but the present disclosure is not limited to dot matrix graph, which can also be a vector graph; in reality, a person having ordinary skills in the art can expressly apply the technical solutions of the present disclosure to dot matrix graphs, vector graphs, and any existing technology known to a person having ordinary skills in the art that can use the above technical solutions.

A person having ordinary skills in the art can appreciate: all or some steps of the method embodiments can be implemented through hardware related to computer instructions. The above-described program may be stored in a computer-readable storage medium. When the program is executed, the steps of the method of the above various embodiments can be executed. The above-described storage medium may include: various media that can store program codes, such as ROM, RAM, magnetic disks or optic disks.

Finally, it should be noted that: the above embodiments are only used to explain the technical solutions of the present disclosure, and are not to limit the present disclosure; although detailed explanations have been provided for the present disclosure with reference to the above various embodiments, a person having ordinary skills in the art should understand: the person having ordinary skills in the art can modify the technical solutions described in the above various embodiments, or carry out equivalent replacement to some or all technical features. These modifications or replacements do not render relevant technical solutions to deviate from the scope of the technical solutions of various embodiments of the present disclosure.

## Claims

1. A map zone dividing method, **characterized in that**, comprising:
obtaining a map of a target zone; the map including reachable boundaries in the target zone for an autonomous mobile device;
determining, for a plurality of internal points within the reachable boundaries in the map, a representative distance value of an internal point based on distances from the internal point to each of the reachable boundaries;
determining a main structure of each map candidate room based on representative distance values of the plurality of internal points within the reachable boundaries in the map;
expanding the main structure of each map candidate room, to obtain each map room.

2. The method according to claim 1, **characterized in that**, determining a main structure of each map candidate room based on representative distance values of the plurality of internal points within the reachable boundaries in the map, comprises:
setting a shortest distance of distances from an internal point to each of the reachable boundaries as a representative distance value;
repeatedly executing the following steps, until no more seed exists in an updated map:
determining an internal point having a maximum representative distance value in the map;
determining a first threshold value based on the maximum representative distance value in the map; the first threshold value being smaller than the maximum representative distance value;
determining at least one seed zone in the map in which internal points having representative distance values greater than the first threshold value and smaller than the maximum representative distance value are located;
for each seed zone, when the internal point having the maximum representative distance value is located within the seed zone, setting the seed zone as a seed of the map candidate room;
dilating the seed of the map candidate room, to obtain a main structure of the map candidate room;
deleting the main structure of the map candidate room from the map, to obtain the updated map.

3. The method according to claim 1, **characterized in that**, determining a main structure of each map candidate room based on representative distance values of the plurality of internal points within the reachable boundaries in the map, comprises:
setting a longest distance of distances from an internal point to each of the reachable boundaries as a representative distance value;
repeatedly executing the following steps, until no more seed exists in an updated map;
determining an internal point having a minimum representative distance value in the map;
determining a second threshold value based on the minimum representative distance value in the map, the second threshold value being greater than the minimum representative distance value;
determining at least one seed zone in the map in which internal points having representative distance values smaller than the second threshold value and greater than the minimum representative distance value are located;
for each seed zone, when the internal point having the minimum representative distance value is located within the seed zone, setting the seed zone as a seed of the map candidate room;
dilating the seed of the map candidate room, to obtain a main structure of the map candidate room;
deleting the main structure of the map candidate room from the map, to obtain the updated map.

4. The method according to any of claims 1-3, **characterized in that**, expanding the main structure of each map candidate room, to obtain each map room, comprises:
expanding the main structure of each map candidate room at the same time and at the same predetermined speed, to form an expanded main structure;
when an expanded main structure of a map candidate room encounters an expanded structure of another map candidate room to form a main structure crossing border, or when the expanded structure of the map candidate room encounters a reachable boundary of the map, stopping expansion, to obtain each map room.

5. The method according to any of claims 1-3, **characterized in that**, after expanding the main structure of each map candidate room to obtain each map room, the method also comprises:
fusing each map room, to obtain a post-fusion map room.

6. The method according to claim 5, **characterized in that**, fusing each map room, to obtain a post-fusion map room, also comprises:
obtaining an area of each map room and a main structure crossing border between map rooms;
determining an adjacency relationship between map rooms based on the main structure crossing border between the map rooms, to determine adjacent rooms;
comparing an area of a map room with an area threshold value, when the area of the map room is smaller than the area threshold value, determining the map room as a target room;
fusing the target room with an adjacent room of the target room into the post-fusion map room.

7. The method according to any of claims 1-3, **characterized in that**, obtaining the map of the target zone, comprises:
obtaining an original map of the target zone;
pre-processing the original map, to obtain the map of the target zone.

8. A map zone dividing apparatus, **characterized in that**, comprising:
an obtaining module, configured to obtain a map of a target zone; the map including reachable boundaries in the target zone for an autonomous mobile device;
a representative distance value determining module, configured to determine, for a plurality of internal points within the reachable boundaries in the map, a representative distance value of an internal point based on distances from the internal point to each of the reachable boundaries;
a main structure determining module, configured to determine a main structure of each map candidate room based on representative distance values of the plurality of internal points within the reachable boundaries in the map;
a main structure expanding module, configured to expand the main structure of each map candidate room, to obtain each map room.

9. An autonomous mobile device, **characterized in that**, comprising:
a storage device, configured to store program instructions;
a processor, configured to retrieve and execute the program instructions stored in the storage device, to execute the method according to any of claims 1-7.

10. A computer-readable storage medium, **characterized in that**, the storage medium stores a computer program, when the computer program is executed by a processor, the method according to any of claims 1-7 is performed.

11. A computer program product, including a computer program, **characterized in that**, when the computer program is executed by a processor, the method according to any of claims 1-7 is performed.
